# EUROPEAN PATENT APPLICATION

(11) **EP 4 431 278 A1**
(43) Date of publication of application: **18.09.2024**
(21) Application number: 22893020.2
(22) Date of filing: 27.09.2022
(51) Int. Cl.: B32B 27/32, B32B 27/18, H01M 50/105

(54) **PROPYLENE-BASED MULTILAYER FILM FOR CELL POUCH**

(30) Priority: 11.11.2021 KR 20210154954
(71) Applicant: Lotte Chemical Corporation, Seoul 05551 (KR)
(72) Inventor: BYUN, Ju Yi, Daejeon 34110 (KR); KIM, Min Kyu, Daejeon 34110 (KR); CHO, Jin Ju, Daejeon 34110 (KR); KIM, Song Ho, Daejeon 34110 (KR)
(74) Representative: Germain Maureau
(86) International application number: PCT/KR2022/014484
(87) International publication number: WO 2023/085597

(57) **Abstract**

Disclosed is a propylene-based multilayer film, which is mainly used as a sealant layer for a cell pouch, and thus allows crack generation in an adhesive layer inside the pouch to be suppressed even when a battery is exposed to physical and chemical shocks or electrical stress, and which has excellent formability, insulating properties, and electrolyte resistance. The present invention provides a propylene-based multilayer film including (a) a propylene-based binary copolymer or a propylene-based tertiary copolymer, (b) an amorphous propylene rubber, (c) an amide-based slip agent, (d) an anti-blocking agent, and (e) a modified polyolefin, the propylene-based multilayer film including a skin layer, a core layer, and a seal layer, wherein the seal layer has a thickness in the range of 10 to 15% of a thickness of the multilayer film, and (a) the propylene-based binary copolymer or the propylene-based tertiary copolymer has a rubber domain having a size of 3 to 10% of a thickness of the seal layer formed therein.

## Description

### TECHNICAL FIELD

### Cross-reference to Related Applications

The present invention relates to a polypropylene-based multilayer film, and more particularly, to a polypropylene-based multilayer film for a cell pouch.

This application claims the benefit of Korean Patent Application No. 10-2021-0154954, filed on November 11, 2021, in the Korean Intellectual Property Office, the disclosure of which is incorporated herein in its entirety by reference.

### BACKGROUND ART

Secondary batteries generally refer to lithium secondary batteries, and are batteries used in portable terminal devices such as laptop computers, smart phones, tablet PCs, and video cameras, electric vehicles including hybrid vehicles, smart grids for energy storage, and the like, and research has been conducted to overcome various environmental factors such as severe thermal environment and mechanical impacts while implementing smaller, lighter, and thinner batteries.

As a packaging material used for such lithium batteries, a pouch for a secondary battery, which is different from typical can-type packaging materials and provides benefits of convenient modification in the shape of batteries, is used as an exterior material having a multilayered structure (e.g., an inner resin layer, an aluminum layer, and an outer resin layer). A commonly-used pouch film for a secondary battery is formed having a multilayered structure sequentially having an inner resin layer composed of an adhesive layer by a polyolefin such as polyethylene (PE), casted polypropylene (cPP), and polypropylene (PP), or a copolymer thereof, which has heat adhesion, thereby serving as a sealing agent, an aluminum layer, which is a metal foil layer serving as a substrate for maintaining mechanical strength and a barrier layer against moisture and oxygen, and an outer resin layer formed of a functional polymer film such as polyethylene terephthalate (PET), polyethylene naphthalate (PEN), nylon, and a liquid crystal polymer (LCP) resin, which is to protect a battery cell from an external impact.

Typically, a packaging material in which a metal, aluminum in particular, is press-processed to be molded into a cylindrical shape, a parallelepiped shape, or the like has been mainly used. However, in the case of such a metal-material can packaging material, there is a limitation in that an outer wall of a container is hard so that the shape of a battery itself is determined by the shape of the metal-material can packaging material.

In order to overcome the limitations, a technology for packaging materials made of multilayer plastic films has been developed. For example, Korean Patent Laid-Open Publication No. 2003-0029141 discloses a cell pouch formed of a base layer, an adhesive layer, a barrier layer, a dry lamination layer, and a sealant layer, wherein the sealant layer is composed of a low-fluidity polypropylene layer and a high-fluidity polypropylene layer, and Korean Patent Laid-Open Publication No. 2002-0030737 discloses a cell pouch in which a base film and a surface protection layer are laminated using biaxially stretched nylon, polyethylene terephthalate (PET) and polyolefin resins, and a technology of coating the base film with a fluorine-based resin, a silicone-based resin, or an acryl-based resin as a secondary processing.

A pouch-type secondary battery may have flexibility in the form thereof, and be desirably implemented as a secondary battery of the same capacity with a smaller volume and mass. However, unlike a can-type secondary battery, the pouch-type secondary battery uses a soft pouch as a container, and thus may be damaged for various reasons in various processes. For example, during a process of accommodating an electrode assembly inside a pouch, a protruding portion such as an electrode tab or an electrode lead causes damage such as cracks to PP and cPP layers inside the pouch, and when an aluminum layer is exposed due to such damage, a side reaction is caused from reactivity with an electrolyte solution. The aluminum layer exposed to the electrolyte solution as described above may be corroded by causing a chemical reaction with the electrolyte solution, and oxygen or moisture penetrated or diffused into a battery, through which a corrosive gas is generated, resulting in swelling in which the inside of the battery expands. Specifically, lithium hexafluorophosphate (LiPF₆) may react with water and oxygen to generate hydrofluoric acid (HF), which is a corrosive gas. The hydrofluoric acid may react with aluminum and cause a rapid exothermic reaction, and as a secondary reaction, when the hydrofluoric acid is adsorbed to a surface of the aluminum and penetrates into a tissue, the brittleness of the tissue increases so that cracks may be generated in a pouch film even by a micro-impact, and accordingly, due to the leakage of the electrolyte solution, lithium and the atmosphere may react to cause ignition.

Korean Patent No. 1485523 discloses an aluminum pouch film for a secondary battery including an outer resin layer composed of polyethylene terephthalate, nylon, and the like, a first adhesive layer, an aluminum layer, a second adhesive layer, and an inner resin layer composed of polyolefin, but only describes the composition of the entire layer of a pouch, and does not describe a specific composition of the polyolefin constituting the inner resin layer.

Korean Patent Laid-Open Publication No. 2019-0047104 discloses a polypropylene-based composite film including a layer A including, as a main component, a propylene-based random copolymer obtained by randomly copolymerizing propylene with ethylene or butene, a layer B composed of 60 wt% to 90 wt% of a propylene polymer having a comonomer (ethylene or butene) content of 0 wt% to 1.5 wt% and 10 wt% to 40 wt% of a propylene polymer having a comonomer (ethylene or butene) content of 10 wt% to 40 wt%, and a layer C composed of a propylene-based ethylene or butene random copolymer, and in this case, the layer B includes 100 ppm to 2000 ppm of a fatty acid amide-based lubricant and 0 wt% to 20 wt% of a metallocene catalyst-based low-density polyethylene, but does not specifically describe the other raw materials other than the raw materials of the layer B.

Korean Patent No. 1894449 discloses a polypropylene-based composite film including a first skin layer (seal) including, as a main component, a random polypropylene having a Tm of 140 to 150 °C and a slip agent, a core layer including, as a main component, a block polypropylene having a Tm of 155 to 165 °C and a slip agent, and a second skin layer (skin) including, as a main component, a random polypropylene having a Tm of 140 to 150 °C and a slip agent, and in this case, the slip agent used in all layers is a fatty acid amide-based slip agent selected from oleamide, erucamide, behenamide, and stearamide, the first skin layer includes at least one therefrom, and the core layer includes one of behenamide and stearamide, and erucamide, but does not specifically describe characteristics regarding proportion of the seal layer in the entire film and domain of the used random polypropylene.

### DISCLOSURE OF THE INVENTION

### TECHNICAL PROBLEM

An aspect of the present invention provides a propylene-based multilayer film, which is mainly used as a sealant layer for a cell pouch, and thus allows crack generation in an adhesive layer inside the pouch to be suppressed even when a battery is exposed to physical and chemical shocks or electrical stress, and which has excellent formability, an insulating property, and electrolyte resistance.

Another aspect of the present invention provides a material for a cell pouch using the multilayer film as a sealant layer.

### TECHNICAL SOLUTION

According to an aspect of the present invention, provided is a propylene-based multilayer film including (a) a propylene-based binary copolymer or a propylene-based tertiary copolymer, (b) an amorphous propylene rubber, (c) an amide-based slip agent, (d) an anti-blocking agent, and (e) a modified polyolefin, the propylene-based multilayer film including a skin layer, a core layer, and a seal layer, wherein the seal layer has a thickness in the range of 10 to 15% of a thickness of the multilayer film, and (a) the propylene-based binary copolymer or the propylene-based tertiary copolymer has a rubber domain having a size of 3 to 10% of a thickness of the seal layer formed therein.

In addition, in the polypropylene-based multilayer film, (a) the propylene-based binary copolymer or the propylene-based tertiary copolymer includes ethylene in an amount of 2 wt% to 7 wt% or 1-butene in an amount of 0 wt% to 6 wt%, (b) the amorphous propylene rubber includes ethylene or 1-butene in an amount of 10 wt% to 60 wt%, (c) the amide-based slip agent is a saturated amide-based organic compound or an unsaturated amide-based organic compound, (d) the anti-blocking agent is a spherical silica having an average particle diameter of 1.5 to 3 µm, and (e) the modified polyolefin is formed with dicarboxylic acid or acid anhydride thereof grafted in an amount of 1 to 10 wt%.

In addition, in the polypropylene-based multilayer film, (a) the propylene-based binary copolymer or the propylene-based tertiary copolymer has a melting point (Tm) of 125 °C to 155 °C and a melt index MI (230 °C, a load of 2.16 kg) of 1 to 12 g/10 min, (b) the amorphous propylene rubber has a melt index MI (230 °C, a load of 2.16 kg) of 1 to 5 g/10 min, (c) the amide-based slip agent is a mixture of two or more of amide-based slip agents having 14 to 22 carbon atoms, and (d) the anti-blocking agent is particles having a moisture content of less than 0.5 wt% when dried at 105 °C for 60 min, the particles having a bulk density of 0.8 g/cm³ to 1.0 g/cm³.

In addition, in the polypropylene-based multilayer film, the skin layer includes (a) a propylene-based binary copolymer or a propylene-based tertiary copolymer in an amount of 70 parts by weight to 99 parts by weight, (e) a modified polyolefin in an amount of 1 part by weight to 30 parts by weight, and (d) an anti-blocking agent in an amount of 0.1 parts by weight to 2 parts by weight, the core layer includes (a) a propylene-based binary copolymer or a propylene-based tertiary copolymer in an amount of 50 parts by weight to 90 parts by weight and (b) an amorphous propylene rubber in an amount of 10 parts by weight to 50 parts by weight, and the seal layer includes (a) a propylene-based binary copolymer or a propylene-based tertiary copolymer in an amount of 60 parts by weight to 140 parts by weight, (c) an amide-based slip agent in an amount of 0.1 parts by weight to 2 parts by weight, and (d) an anti-blocking agent in an amount of 0.1 parts by weight to 2 parts by weight, and with respect to the total film composition, (a) a propylene-based binary copolymer or a propylene-based tertiary copolymer is included in an amount of 80 parts by weight to 90 parts by weight, (b) an amorphous propylene rubber is included in an amount of 10 parts by weight to 20 parts by weight, (c) an amide-based slip agent is included in an amount of 0.1 parts by weight to 0.3 parts by weight, d) an anti-blocking agent is included in an amount of 0.05 parts by weight to 0.1 parts by weight, and (e) a modified polyolefin is included in an amount of 0.4 part by weight to 0.8 parts by weight.

In addition, in the polypropylene-based multilayer film, the multilayer film has a thermal bonding strength of 60 N/15 mm or greater as measured according to a method below, and a peel strength that remains 80% or greater after immersion in an electrolyte solution.

### [Method of measuring thermal bonding strength]

The multilayer film (40 um thick), an aluminum foil (50 um thick, stacked on the skin layer of the multilayer film), and nylon (15 um thick, stacked on the aluminum foil) are sequentially stacked, combined at 130 °C, and cured at 50 °C for 14 days, and the cured combined film is brought into contact with the multilayer film, heat-sealed at 200 °C with 2 kgf for 1 s, and cut to a width of 15 mm to measure peel strength at a peel angle of 180° at a peel rate of 100 mm/min at 23 °C.

### [Method of measuring electrolyte resistance properties]

The test piece used for measuring the thermal bonding strength is immersed in an electrolyte solution at 85 °C for 75 hours, and then the peel strength thereof is measured in the same manner as in the method for measuring the thermal bonding strength.

In addition, in the polypropylene-based multilayer film, the multilayer film has no burst in a forming test according to a method below, and peeling takes place only between the multilayer films upon testing of thermal bonding strength.

### [Method of measuring forming performance]

The combined film is placed on a frame-type metal mold (10 cm X 10 cm) with the nylon surface touching an edge of the mold, and the multilayer film surface is pressed with a square pendulum to perform drawing up to a depth of at least 6 mm 5 times to determine the number of bursts in a corner portion of the combined film.

### [Method of testing thermal bonding strength]

The multilayer film (40 um thick), an aluminum foil (50 um thick, stacked on the skin layer of the multilayer film), and nylon (15 um thick, stacked on the aluminum foil) are sequentially stacked, combined at 130 °C, and cured at 50 °C for 14 days, and the cured combined film is brought into contact with the multilayer film, heat-sealed at 200 °C with 2 kgf for 1 s, and cut to a width of 15 mm to perform peeling at a peel angle of 180° at a peel rate of 100 mm/min at 23 °C.

According to another aspect of the present invention, provided is a material for a cell pouch, which includes a sealant layer formed of the polypropylene-based multilayer film, a barrier layer formed on the sealant layer, and an outer resin layer formed on the barrier layer.

### ADVANTAGEOUS EFFECTS

According to the present invention, a polypropylene-based multilayer film including a skin layer, a core layer, and a seal layer in a specific composition involves a relationship between a seal layer thickness and a rubber domain size of propylene-based binary or tertiary copolymers as a relationship between the thickness of a specific layer and properties of a specific component, which provides the polypropylene-based multilayer film with excellent adhesion performance and formability in post-processing and excellent mechanical properties, surface properties, and transparency as well when used as a sealant layer of a cell pouch.

### BRIEF DESCRIPTION OF THE DRAWINGS

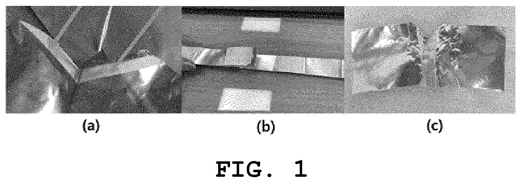

FIG. 1 shows the form of a cell pouch sealant layer after peeling, and is an image describing (a) peel seal, (b) interlayer peeling, and (c) delamination.

### MODE FOR CARRYING OUT THE INVENTION

Hereinafter, the present disclosure will be described in detail through preferred embodiments. Before getting to the point, it will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention. Thus, configurations of embodiments described herein are simply the most preferable embodiments of the present disclosure and are not representative of all the technical spirits of the disclosure, and thus it should be understood that there may exist various equivalents and modified examples as substitutes at the time when the present disclosure is filed.

The inventors of the present invention studied a film material satisfying both required adhesive performance and formability in post-processing as a material including a skin layer, a core layer, and a seal layer, and used as a sealant layer of typical cell pouches, and surprisingly found a relationship between a seal layer thickness and a rubber domain size of propylene-based binary or tertiary copolymers, which provides the film material with excellent adhesion performance and formability in post-processing and excellent mechanical properties, surface properties, and transparency as well when used as a sealant layer of a cell pouch, and have thus completed the invention.

Therefore, the present invention discloses a propylene-based multilayer film including (a) a propylene-based binary copolymer or a propylene-based tertiary copolymer, (b) an amorphous propylene rubber, (c) an amide-based slip agent, (d) an anti-blocking agent, and (e) a modified polyolefin, the propylene-based multilayer film comprising a skin layer, a core layer, and a seal layer, wherein the seal layer has a thickness in the range of 10 to 15% of a thickness of the multilayer film, and (a) the propylene-based binary copolymer or the propylene-based tertiary copolymer has a rubber domain having a size of 3 to 10% of a thickness of the seal layer formed therein.

The polypropylene-based multilayer film according to the present invention provides excellent adhesive performance and satisfies formability in post-processing together and also provides excellent mechanical properties, surface properties, and transparency, when used as a sealant layer of a cell pouch including a sealant layer, a barrier layer formed on the sealant layer, and an outer resin layer formed on the barrier layer.

The sealant layer may have a thickness of about 25 um to 120 um for sufficient thermal bonding properties, but is not limited thereto, and may have a suitable thickness depending on the use of a cell pouch to be implemented, e.g., a thin-film cell pouch implemented in a total thickness of about 88 µm, a general cell pouch implemented in a total thickness of about 113 um, or a medium-to-large cell pouch implemented in a total thickness of about 153 µm.

The outer resin layer is an outermost layer of a lithium secondary battery packaging material, which is provided on the barrier layer, and thus, may be exposed to the outside, and it is preferable that the outer resin layer is made from a material having heat resistance, cold resistance, pinhole resistance, insulation properties, chemical resistance, formability, and the like together with abrasion resistance in order to protect the barrier layer. The outer resin layer made from such a heat-resistant resin film may include a polyamide-based resin or a polyester-based resin. The polyamide-based resin may be nylon, which is desirable for molding due to the high elongation thereof, and the polyester-based resin may be polybuthylene terephthalate (PBT) or polyethylene terephthalate (PET), which may implement high chemical resistance, pinhole resistance, insulation properties, mechanical strength, and the like.

The outer resin layer may have a thickness of about 15 um to 30 um in consideration of all of sufficient abrasion resistance, heat resistance, pinhole resistance, chemical resistance, formability, insulation properties, and the like. When the outer resin layer is too thin, the formability of the secondary battery packaging material may be degraded due to the lack of strength of the outer resin layer. On the other hand, when the outer resin layer is too thick, the sealant layer and the barrier layer which are provided below the outer resin layer needs to be implemented relatively thin, so that there may be degradation in thermal bonding strength and interlayer peel strength in the secondary battery packaging material. However, the thickness of the outer resin layer is not limited to the above-described range, and the outer resin layer may have a suitable thickness depending on the use of a cell pouch to be implemented, e.g., a thin-film cell pouch implemented in a total thickness of about 88 µm, a general cell pouch implemented in a total thickness of about 113 um, or a medium-to-large cell pouch implemented in a total thickness of about 153 µm.

In the present invention, a first adhesive resin layer may be further formed to bond the outer resin layer and the barrier layer.

The first adhesive resin layer is formed from an adhesive capable of bonding the outer resin layer and the barrier layer, and the adhesive used for forming the first adhesive resin layer may be a two-liquid curable adhesive, or may be a one-liquid curable adhesive. Further, the adhesion mechanism of the adhesive used for forming the first adhesive resin layer is not particularly limited, and may be any one of a chemical reaction type, a solvent volatilization type, a heat melting type, a heat pressing type, and the like.

Specific examples of the resin component of the adhesive that may be used for forming the first adhesive resin layer may include polyester-based resins such as polyethylene terephthalate, polybutylene terephthalate, polyethylene naphthalate, polybutylene naphthalate, polyethylene isophthalate, polycarbonate, and copolymerized polyester; polyether-based adhesives; polyurethane-based adhesives; epoxy-based resins; phenol resin-based resins; polyamide-based resins such as nylon 6, nylon 66, nylon 12, and copolymerized polyamide; polyolefin-based resins such as polyolefins, acid-modified polyolefins, and metal-modified polyolefins; polyvinyl acetate-based resins; cellulose-based adhesives; (meth)acryl-based resins; polyimide-based resins; amino resins such as urea resins and melamine resins; rubbers such as chloroprene rubber, nitrile rubber, and styrene-butadiene rubber; silicone-based resins; and ethylene fluoride-propylene copolymers. These adhesive components may be used alone, or may be used in combination of two or more thereof. The combination form of two or more adhesive components is not particularly limited, and examples of the adhesive components may include mixed resins of polyamides and acid-modified polyolefins, mixed resins of polyamides and metal-modified polyolefins, mixed resins of polyamides and polyesters, mixed resins of polyesters and acid-modified polyolefins, and mixed resins of polyesters and metal-modified polyolefins. In particular, polyurethane-based two-liquid curable adhesives; and polyamides, polyesters or blend resins of these resins and modified polyolefins are preferred because they are excellent in spreadability, durability and a transformation inhibition action under high-humidity conditions, a thermal degradation inhibition action during heat-sealing, and the like, and effectively suppress occurrence of delamination by inhibiting a reduction in lamination strength between the outer resin layer and the barrier layer.

The first adhesive resin layer may have a thickness of, for example, 2 to 10 µm.

The barrier layer is to block the entry and exit of moisture or air from the outside and a gas generated from the inside, and may come into contact with the sealant layer. The barrier layer may include a metal having gas barrier properties and moisture barrier properties, and may include, for example, one or more (single metal or a mixture of single metals) selected from the group consisting of aluminum (Al), iron (Fe), copper (Cu), nickel (Ni), tin (Sn), zinc (Zn), indium (In), tungsten (W), and the like, or an alloy of two or more selected therefrom. As a preferred embodiment, the barrier layer may include aluminum (Al) or an aluminum alloy (Al alloy) in consideration of all of moisture barrier properties, gas barrier properties, and formability. The barrier layer may have a thickness of about 25 um to 45 um, for a sufficient degree of gas barrier properties and moisture barrier properties. However, the thickness of the barrier layer is not limited thereto, and the barrier layer may have a suitable thickness depending on the use of a cell pouch to be implemented, that is, in general, a thin-film cell pouch implemented in a total thickness of about 88 µm, a general cell pouch implemented in a total thickness of about 113 um, or a medium-to-large cell pouch implemented in a total thickness of about 153 µm.

Preferably, at least one surface, preferably the sealant layer-side surface, further preferably both surfaces, of the barrier layer is/are subjected to a chemical conversion treatment for stabilization of bonding, prevention of dissolution or corrosion, and the like. Herein, the chemical conversion treatment is a treatment for forming an acid resistance film on the surface of the barrier layer. Examples of the chemical conversion treatment may include a chromic acid chromate treatment using a chromic acid compound such as chromium nitrate, chromium fluoride, chromium sulfate, chromium acetate, chromium oxalate, chromium biphosphate, acetylacetate chromate, chromium chloride, or chromium potassium sulfate; a phosphoric acid chromate treatment using a phosphoric acid compound such as sodium phosphate, potassium phosphate, ammonium phosphate, or polyphosphoric acid; and a chromate treatment using an aminated phenol polymer.

Examples of the chemical conversion treatment method for imparting corrosion resistance to the barrier layer may include a method in which the barrier layer is coated with a dispersion of fine particles of a metal oxide such as aluminum oxide, titanium oxide, cerium oxide, or tin oxide, or barium sulfate in phosphoric acid, and baked at 150 ° C or higher to form a corrosion resistance treatment layer on the surface of the barrier layer. A resin layer with a cationic polymer crosslinked using a crosslinking agent may be formed on the corrosion resistance treatment layer. In this case, examples of the cationic polymer may include polyethyleneimine, ion polymer complexes composed of a polymer having polyethyleneimine and a carboxylic acid, primary amine-grafted acrylic resins obtained by grafting primary amine to an acryl backbone, polyallylamine or a derivative thereof, and aminophenol. These cationic polymers may be used alone, or may be used in combination of two or more thereof. Examples of the crosslinking agent may include compounds having at least one functional group selected from the group consisting of an isocyanate group, a glycidyl group, a carboxyl group, and an oxazoline group, and silane coupling agents. These crosslinking agents may be used alone, or may be used in combination of two or more thereof.

These chemical conversion treatments may be performed alone, or may be performed in combination of two or more thereof. In addition, the chemical conversion treatments may be performed using one compound alone, or may be performed using two or more compounds in combination. In particular, a chromic acid chromate treatment is preferred, and a chromate treatment using a chromic acid compound, a phosphoric acid compound, and the aminated phenol polymer in combination is further preferred.

The chemical conversion treatment is performed in the following manner: a solution containing a compound to be used for formation of an acid resistance film is applied to the surface of the barrier layer through a bar coating method, a roll coating method, a gravure coating method, an immersion method, or the like, and heating is then performed so that the temperature of the metal foil is about 70 to 200 ° C.

In the present invention, a second adhesive resin layer may be further formed to bond the barrier layer and the sealant layer.

The second adhesive resin layer is formed from an adhesive capable of bonding the sealant layer and the barrier layer. The adhesive used for forming the second adhesive resin layer may be a two-liquid curable adhesive, or may be a one-liquid curable adhesive. Further, the adhesion mechanism of the adhesive used for forming the second adhesive resin layer is not particularly limited, and may be any one of a chemical reaction type, a solvent volatilization type, a heat melting type, a heat pressing type, and the like.

Specific examples of the resin component of the adhesive that may be used for forming the second adhesive resin layer may include polyester-based resins such as polyethylene terephthalate, polybutylene terephthalate, polyethylene naphthalate, polybutylene naphthalate, polyethylene isophthalate, polycarbonate, and copolymerized polyester; polyether-based adhesives; polyurethane-based adhesives; epoxy-based resins; phenol resin-based resins; polyamide-based resins such as nylon 6, nylon 66, nylon 12, and copolymerized polyamide; polyolefin-based resins such as polyolefins, acid-modified polyolefins, and metal-modified polyolefins; polyvinyl acetate-based resins; cellulose-based adhesives; (meth)acryl-based resins; polyimide-based resins; amino resins such as urea resins and melamine resins; rubbers such as chloroprene rubber, nitrile rubber, and styrene-butadiene rubber; silicone-based resins; and ethylene fluoride-propylene copolymers. These adhesive components may be used alone, or may be used in combination of two or more thereof. The combination form of two or more adhesive components is not particularly limited, and examples of the adhesive components may include mixed resins of polyamides and acid-modified polyolefins, mixed resins of polyamides and metal-modified polyolefins, mixed resins of polyamides and polyesters, mixed resins of polyesters and acid-modified polyolefins, and mixed resins of polyesters and metal-modified polyolefins. In particular, polyurethane-based two-liquid curable adhesives, polyolefin-based resins, and blended resins of these resins and modified polyolefins are preferred because they are excellent in spreadability, durability and a transformation inhibition action under high-humidity conditions, a thermal degradation inhibition action during heat-sealing, and the like, and effectively suppress occurrence of delamination by inhibiting a reduction in lamination strength between the sealant layer and the barrier layer.

The second adhesive resin layer may have a thickness of, for example, 2 to 60 µm.

While the method for producing the secondary battery packaging material according to the present invention is not particularly limited as long as a laminate in which layers each having a predetermined composition are laminated is obtained, for example the following method is shown as an example.

First, a laminate in which the outer resin layer, the first adhesive resin layer, and the barrier layer are laminated in this order (hereinafter, laminate A) is formed. Specifically, the laminate A may be formed through a dry lamination method in which an adhesive to be used for formation of the first adhesive resin layer is applied onto the barrier layer in which the surface thereof is subjected to a chemical conversion treatment, using a coating method such as an extrusion method, a gravure coating method, or a roll coating method, and dried, the outer resin layer is then laminated, and the first adhesive resin layer is cured.

Then, the sealant layer is laminated on the barrier layer of the laminate A. When a second adhesive resin layer is to be provided between the barrier layer and the sealant layer, for example, (1) a method in which an adhesive for formation of the second adhesive resin layer is laminated on the barrier layer of the laminate A through a method of solution coating and drying at a high temperature, and the sealant layer formed in advance in the form of a two- or threelayer sheet is laminated on the second adhesive resin layer through a method of thermal lamination (dry lamination method), (2) a method in which the sealant layer formed of two or three layers is laminated on the barrier layer of the laminate A through co-extrusion (co-extrusion lamination method), (3) a method in which a molten second adhesive resin layer is supplied between the barrier layer of the laminate A and the sealant layer formed in advance in the form of a two- or threelayer sheet to bond the laminate A and the sealant layer through the second adhesive resin layer (sand lamination method), and the like may be used.

The sealant layer of the cell pouch is an element that affects the stability of batteries, and thus preventing electrolyte leakage is critical. To prevent this, shape after peeling needs to be observed. The shape after peeling may be divided into three types: peel seal (a), interlayer peeling (b), and delamination (c), as shown in FIG. 1. The peel seal is one in which a seal layer on both sides evenly whitens and peels off, and this serves as a benefit in stability due to the fact that the existing adhesive strength remains even against external impacts. The interlayer delamination indicates separation between adhesive surfaces inside a multilayer cast polypropylene (CPP) film, and the delamination indicates separation between a CPP film and an aluminum foil, and both have reduced adhesive strength compared to before the separation. In the case of interlayer delamination, the CPP film becomes thinner on one side thereof, and in the case of delamination, the CPP film and the aluminum foil are separated and exposed, increasing the possibility of leakage from the exposed portion.

In order to prevent the peeling and secure the adhesive strength together, the ratio of the thickness of the seal layer to the total film thickness needs to be limited to 10 to 15%. The seal layers of both films come into contact upon thermal bonding, and thus play a leading role in thermal bonding properties, and when the ratio of the seal layer thickness to the total film thickness is less than 10%, the amount of heat absorbed by the core layer relatively increases, causing interlayer peeling and low thermal bonding strength, and when the ratio is greater than 15%, heat fusion takes place to cause delamination, making the film unusable.

In this case, in the present invention, rubber domain size of (a) the propylene-based binary copolymer or the propylene-based tertiary copolymer used in the seal layer is 3 to 10% of the seal layer thickness. When thermally bonding films in the above rubber domain size range, the rubber domain, which has a lower glass transition temperature (Tg) than matrix, melts and assists in thermal bonding. When the rubber domain size is large, a portion to be bonded when the films come into contact becomes greater to increase the thermal bonding strength but cause delamination, and when the rubber domain size is small, the thermal bonding strength is degraded. In this case, the rubber domain size may be easily regulated when a person skilled in the art make changes in polymerization conditions such as the type and content of comonomers, catalyst composition and usage, polymerization temperature, and pressure, and in the present invention, there is no limitation on the relationship between the rubber domain size and the polymerization conditions such as the type of comonomers. Meanwhile, the copolymer is manufactured into a 2 mm thick sample using a press heated to 190°C, and the sample is etched using hexane at room temperature and observed through FE-SEM to measure an average size of the rubber domain.

In the present invention, (a) the propylene-based binary copolymer or the propylene-based tertiary copolymer is a main component of the multilayer film, and is a copolymer of propylene and one or two α-olefins other than the propylene, and preferably, may be a binary copolymer in which propylene and ethylene are injected together and polymerized or a tertiary copolymer in which propylene, ethylene, and 1-butene are injected together and polymerized. The polymerization method of the copolymer is a method commonly known in the art, and is not particularly limited in the present invention.
(a) The propylene-based binary copolymer or the propylene-based tertiary copolymer may include the same propylene as an olefin-based adhesive component as a constituent component, and thus, may contribute to the improvement in aluminum peel strength, and (a) the propylene-based binary copolymer or the propylene-based tertiary copolymer is not an amorphous propylene-ethylene copolymer but a crystalline copolymer, and may preferably include 2 wt% to 7 wt% of ethylene or 0 wt% to 6 wt% of 1-butene, more preferably 3 wt% to 6 wt% of ethylene or 0 wt% to 5 wt% of 1-butene, and may preferably have a melting point (Tm) of 125 °C to 155 °C, more preferably 140 °C to 154 °C. When the ethylene content of the propylene-based binary copolymer or the propylene-based tertiary copolymer is less than 2 wt%, whitening and edge bursting may take place during forming due to lack of softness, and wetting in a combining process with an adhesive may be degraded. In addition, when the ethylene content is greater than 7 wt%, appearance issues (deformation and distortion) from heat generation during use may take place due to lack of heat resistance.

Meanwhile, (a) the propylene-based binary copolymer or the propylene-based tertiary copolymer may have a melt index MI (230 °C, a load of 2.16 kg) of 1 to 12 g/10 min, preferably 2 to 8 g/10 min. When the melt index is less than 2 g/10 min, productivity may be degraded, and when greater than 12 g/10 min, the effect of improving aluminum peel strength may be insignificant.

In the present invention, (b) the amorphous propylene rubber is a copolymer of propylene and one kind of an α-olefin other than the propylene, and preferably, propylene and ethylene or 1-butene are injected together, and in this case, the ethylene or the 1-butene may be included in an amount of 10 wt% to 60 wt%, and more preferably, the ethylene is included in an amount of 10 wt% to 30 wt%, or the 1-butene may be included in an amount of 20 wt% to 40 wt%. When the ethylene or the 1-butene is included in an amount of less than 10 wt%, the effect of improving impact resistance may be insignificant, and when greater than 60 wt%, a large amount of low molecules are included, making it sticky during film molding, thereby making a surface of a film uneven, and tensile strength may be reduced. The polymerization method of the copolymer is a method commonly known in the art, and is not particularly limited in the present invention.

In the present invention, in the case of (c) the slip agent, the corresponding organic compound moves to a surface of a base material over time to impart slip properties, thereby lowering a friction coefficient in post-processing processes such as deep drawing to serve to improve formability and workability, and (d) the anti-blocking agent forms irregularities on the surface of the film, thereby alleviating a sticky (blocking) phenomenon in post-processing processes such as deep drawing to serve to improve formability and workability.

(c) The slip agent is preferably an amide-based organic compound synthesized from a fatty acid, and has a high melting point, and has a neutral structure in which a hydroxyl group is substituted with an amino structure.

(c) The slip agent is a mixture of two or more of amide-based slip agents having 14 to 22 carbon atoms, and may preferably be a primary or secondary, saturated or unsaturated amide-based organic compound having 14 to 22 carbon atoms.

(d) The anti-blocking agent is preferably a silica anti-blocking agent in which particles have a spherical shape and particles are uniformly distributed, and in addition, it is preferable that the particles have a moisture content of less than 0.5 wt% when dried (in the conditions of 105 °C and 60 min), have an average particle diameter of 1.5 um to 3.0 um, preferably 2 um to 3 um, and have a bulk density of 0.8 g/ cm³ to 1.0 g/cm³.

(e) The modified polyolefin is an accessory component of the skin layer of the multilayer film, and may be a modified polypropylene grafted with dicarboxylic acid or acid anhydride thereof, which is a polar functional group, in an amount of 1 wt% to 10 wt%, preferably 3 wt% to 5 wt%. When the content of the dicarboxylic acid or acid anhydride thereof of the modified polypropylene is less than 1 wt%, adhesion with an aluminum foil may be degraded, and when the content is greater than 10 wt%, due to a large amount of polar functional groups, fish eyes (F/E) are generated and small molecules are generated, so that after corona surface-treatment, surface tension may be lowered, thereby degrading adhesion with an aluminum foil.

In this case, examples of the dicarboxylic acid may include maleic acid, phthalic acid, itaconic acid, citraconic acid, alkenyl succinic acid, cis-1,2,3,6-tetrahydrophthalic acid, 4-methyl-1,2,3,6-tetrahydrophthalic acid, or a mixture of two or more thereof, and the dianhydride of the dicarboxylic acid may be the dicarboxylic acid anhydride of the above-described examples and preferably the dicarboxylic acid may be maleic acid.

The above components of (a) to (e) constitute main components or accessory components of the skin layer, the core layer, and the seal layer, and may be included in a specific content ratio to implement desired adhesive performance and formability in post-processing when used as a sealant layer of a cell pouch.

That is, in the present invention, the skin layer may include (a) a propylene-based binary copolymer or a propylene-based tertiary copolymer in an amount of 70 parts by weight to 99 parts by weight, (e) a modified polyolefin in an amount of 1 part by weight to 30 parts by weight, and (d) an anti-blocking agent in an amount of 0.1 parts by weight to 2 parts by weight, the core layer may include (a) a propylene-based binary copolymer or a propylene-based tertiary copolymer in an amount of 50 parts by weight to 90 parts by weight and (b) an amorphous propylene rubber in an amount of 10 parts by weight to 50 parts by weight, and the seal layer may include (a) a propylene-based binary copolymer or a propylene-based tertiary copolymer in an amount of 60 parts by weight to 140 parts by weight, (c) an amide-based slip agent in an amount of 0.1 parts by weight to 2 parts by weight, and (d) an anti-blocking agent in an amount of 0.1 parts by weight to 2 parts by weight, and with respect to the total film composition, (a) a propylene-based binary copolymer or a propylene-based tertiary copolymer may be included in an amount of 80 parts by weight to 90 parts by weight, (b) an amorphous propylene rubber may be included in an amount of 10 parts by weight to 20 parts by weight, (c) an amide-based slip agent may be included in an amount of 0.1 parts by weight to 0.3 parts by weight, d) an anti-blocking agent may be included in an amount of 0.05 parts by weight to 0.1 parts by weight, and (e) a modified polyolefin may be included in an amount of 0.4 part by weight to 0.8 parts by weight.

Meanwhile, as long as the resin composition of each layer constituting the polypropylene-based multilayer film according to the present invention does not impair the purpose of the present invention, one or more of various additives such as an antioxidant, a catalyst neutralizer, a pigment, a dispersant, anti-weathering agent, an anti-static agent, a UV stabilizer, and talc may be additionally contained. The amount of each of such additives may be adjusted in consideration of a total preparation amount, a preparation process, and the like within a range known to be used in preparing a polypropylene-based multilayer film according to the present invention without affecting the properties of the film.

In the present invention, the preparation of a multilayer film using the above components may be in accordance with a method commonly known in the art. For example, the components constituting each layer may be introduced into a Henschel mixer and mixed in respective required amounts, prepared in a pellet phase at 180 °C to 240 °C using an extruder, and melt-molded into a film through a multilayer film molding machine to prepare a multilayer.

The polypropylene-based multilayer film according to the present invention provides excellent adhesive performance and satisfies formability in post-processing together and also provides excellent mechanical properties, surface properties, and transparency, when used as a sealant layer of a cell pouch, and the polypropylene-based multilayer film according to the present invention may specifically be provided as a polypropylene-based multilayer film having a thermal bonding strength of 60 N/15 mm or greater as measured according to a method below, a peel strength that remains 80% or greater after immersion in an electrolyte solution, no burst in a forming test according to a method below, and peeling only caused between the multilayer films upon testing of thermal bonding strength.

### [Method of measuring thermal bonding strength]

The multilayer film (40 um thick), an aluminum foil (50 um thick, stacked on the skin layer of the multilayer film), and nylon (15 um thick, stacked on the aluminum foil) are sequentially stacked, combined at 130 °C, and cured at 50 °C for 14 days, and the cured combined film is brought into contact with the multilayer film, heat-sealed at 200 °C with 2 kgf for 1 s, and cut to a width of 15 mm to measure peel strength at a peel angle of 180° at a peel rate of 100 mm/min at 23 °C.

### [Method of measuring electrolyte resistance properties]

The test piece used for measuring the thermal bonding strength is immersed in an electrolyte solution at 85 °C for 75 hours, and then the peel strength thereof is measured in the same manner as in the method for measuring the thermal bonding strength.

### [Method of measuring forming performance]

The combined film is placed on a frame-type metal mold (10 cm X 10 cm) with the nylon surface touching an edge of the mold, and the multilayer film surface is pressed with a square pendulum to perform drawing up to a depth of at least 6 mm 5 times to determine the number of bursts in a corner portion of the combined film.

The polypropylene-based multilayer film according to the present invention may be mainly applied to cell pouch molding, but is not limited thereto, and may be applied to molding of, for example, a packaging film, a retort pouch, an electronic material pouch, and the like.

Hereinafter, the present invention will be described in more detail through specific Examples and Comparative Examples.

In the beginning, Preparation Examples and specifications of components used in Examples and Comparative Examples are as follows.

### (a) Preparation of propylene-based binary copolymer or propylene-based tertiary copolymer

A bulk polymerization reaction is performed by injecting propylene and ethylene or 1-butene into a reaction device, and the comonomer content is regulated within the range of 2 to 7 wt% of ethylene and 0 to 6 wt% of 1-butene so that the rubber domain size in the copolymer is to be the size shown in Table 1 to prepare a propylene-based binary copolymer or a propylene-based tertiary copolymer (melting point (Tm): 140 to 165 °C, melt index (230 °C, a load of 2.16 kg): about 2 to 10 g/10 min). A 2T sample was prepared using a press, etched using hexane, and observed through FE-SEM to measure the rubber domain size, and the melt index, melting point, and ethylene/1-butene content of the copolymer were measured as follows.

### -Melt index

In according with ASTM D1238, the melt index was measured under a load of 2.16 kg at 230 °C.

### -Melting point (Tm)

10 mg of a test piece was pre-melted for 5 minutes at 220 °C in a nitrogen gas atmosphere using a differential scanning calorimeter (trade name: DSC, manufactured by Perkin-Elmer Co.), and then the temperature was dropped to 40 °C at a temperature decrease rate of 5 °C/min. Thereafter, the temperature was raised at a temperature increase rate of 5 °C/min, and the peak temperature of the maximum peak of the obtained melting endothermic curve was defined as the melting point (Tm). In addition, the melting point of indium (In) measured by using the above measuring device at a temperature increase rate of 5 °C was 156.6 °C.

### -Ethylene and 1-butene content

Using an infrared absorption spectrum (FT-IR), the ethylene content was measured using 720 and 730 cm⁻¹ characteristic peaks and the 1-butene content was measured using 767 cm⁻¹ characteristic peaks.

### (b) Amorphous propylene rubber

Propylene-based elastomer (MI 1-4, EL 10 to 30 wt% or BN-1 20 to 40 wt%) was used.

### (c) Amide-based slip agent

Erucamide was used.

### (d) Anti-blocking agent

Spherical silica particles (moisture content of less than 0.5 wt%, average particle diameter of 2 to 3 µm, and bulk density of 0.8 to 1.0 g/cm³) were used.

### (e) Modified polyolefin

Polypropylene grafted with maleic anhydride content of 3 to 5 wt% was used.

### Examples 1 to 5, Comparative Examples 1 to 4

A propylene-based copolymer mixed resin composition was prepared for each layer by performing melt-mixing and pelletization through a single-screw extruder at 220 °C by forming a skin layer in the range of (a) 70 to 99 parts by weight of propylene-based binary copolymer or propylene-based tertiary copolymer, (e) 1 to 30 parts by weight of modified polyolefin, and (d) 0.1 to 2 parts by weight of anti-blocking agent, a core layer in the range of (a) 50 to 90 parts by weight of propylene-based binary copolymer or propylene-based tertiary copolymer and (b) 10 to 50 parts by weight of amorphous propylene rubber, and a seal layer in the range of (a) 96 to 99.8 parts by weight of propylene-based binary copolymer or propylene-based tertiary copolymer, (c) 0.1 to 2 parts by weight of amide-based slip agent, and (d) 0.1 to 2 parts by weight of anti-blocking agent, and using composition ratios of Table 1 below (unit: parts by weight, a phenolic antioxidant commonly added, a phosphate-based antioxidant, and a hydrotalcite added as a catalyst neutralizer) for the overall composition. Thereafter, the prepared mixed resin composition for each layer was melt-molded through a multilayer film molding machine at 220 °C to be formed into a film, thereby preparing a multilayer film having a thickness of 40 um and the thickness ratio of the seal layer shown in Table 1.

Thereafter, a stretched polyamide film (15 um thick) as the outer resin layer and an aluminum thin film (50 um thick) with a phosphate chromate film formed on both sides as a barrier layer were bonded through dry lamination using an adhesive (polyurethane-based two-liquid curable adhesive, 3 um thick). The sealant layer includes three layers and is formed using T-die casting. The outer resin layer, the barrier layer adhesive film, and the sealant layer (thickness: 40 um) were bonded through dry lamination to obtain a packaging material for a lithium secondary battery.

### Test Example

The prepared pellets and films were used to prepare specimens and to measure or evaluate physical properties of the specimens according to a method below, and the results are shown in Table 1 below.

### [Method of measuring or evaluating physical properties]

### (1) Thermal bonding strength

The prepared packaging material was brought into contact with the multilayer film, heat-sealed at 200 °C with 2 kgf for 1 s, and cut to a width of 15 mm to measure peel strength at a peel angle of 180° at a peel rate of 100 mm/min at 23 °C. 80 N/15 mm or greater is marked as '⊚', less than 80 N/15 mm and 60 N/15 mm or greater is marked as 'o', and less than 60 N/15 mm is marked as '△'.

### (2) Electrolyte resistance properties

The test piece used for measuring the thermal bonding strength was immersed in an electrolyte solution at 85 °C for 75 hours, and then the peel strength thereof was measured in the same manner as in the method for measuring the thermal bonding strength, and when the peel strength after the immersion in the electrolyte solution compared to the peel strength before the immersion in the electrolyte solution remained was 80% or greater, it was denoted by 'o'. The composition of the electrolyte solution was [EC/DEC/DMC=1/1/1 (v/v parts) + LiPF₆ (1 mol/L) + H₂O 300 ppm], and in this case, EC is ethylene carbonate, DEC is diethyl carbonate, and DMC is dimethyl carbonate.

### (3) Slip properties

Friction coefficient was measured (with respect to the multilayer film surface), and when the dynamic friction coefficient was 0.3 or less, it was marked as '⊚', and when the dynamic friction coefficient was greater than 0.3 and 0.4 or less, it was marked as 'o'.

### (4) Forming performance

The packaging material was placed on a frame-type metal mold (10 cm X 10 cm) with the outer resin layer touching an edge of the mold, and the multilayer film surface was pressed with a square pendulum to perform drawing up to a depth of at least 9 mm, and when there was 0 burst in a corner portion of the packaging material, it was denoted by '⊚', when there were 1 to 3 bursts, it was denoted by 'Δ', and when there were 4 bursts, it was denoted by 'X'.

### (5) Peel seal

In the measuring of thermal bonding strength, a case in which the films on both sides peeled off evenly as shown in FIG. 1(a) was marked as 'o', a case in which peeling occurred between the skin layer, core layer, or seal layer inside the film, instead of between the seal layers of the two films, as shown in FIG. 1(b) was marked as '△', and a case in which peeling occurred between the film and the aluminum foil as shown in FIG. 1(c) was marked as 'X'.

**[Table 1]**

| Item | | Example | | | | | Comparative Example | | | |
|---|---|---|---|---|---|---|---|---|---|---|
| | | 1 | 2 | 3 | 4 | 5 | 1 | 2 | 3 | 4 |
| Seal layer thickness ratio (%) | | 12.5 | 10 | 15 | 12.5 | 12.5 | 7.5 | 20 | 12.5 | 12.5 |
| Rubber domain size/Seal layer thickness (%) | | 5 | 6.25 | 4.17 | 10 | 4 | 8.33 | 3.12 | 16 | 2 |
| Composi tion (part by weight) | (a) | 84 | 84 | 85 | 84 | 84 | 83 | 86 | 84 | 84 |
| | (b) | 15 | 15 | 14 | 15 | 15 | 16 | 13 | 15 | 15 |
| | (c) | 0.20 | 0.20 | 0.20 | 0.20 | 0.20 | 0.19 | 0.22 | 0.20 | 0.20 |
| | (d) | 0.07 | 0.07 | 0.08 | 0.07 | 0.07 | 0.06 | 0.10 | 0.07 | 0.07 |
| | (e) | 0.6 | 0.6 | 0.6 | 0.6 | 0.6 | 0.6 | 0.6 | 0.6 | 0.6 |
| Propertie s | Thermal bonding strength | ⊚ | ○ | ⊚ | ⊚ | ○ | Δ | ⊚ | ⊚ | Δ |
| | Electrolyte resistance | ○ | ○ | ○ | ○ | ○ | ○ | ○ | ○ | ○ |
| | Slip property | ⊚ | ⊚ | ⊚ | ⊚ | ⊚ | ○ | ⊚ | ⊚ | ⊚ |
| | Forming | ⊚ | ⊚ | ⊚ | ⊚ | ⊚ | Δ | ○ | X | Δ |
| | Peel seal | ○ | ○ | ○ | ○ | ○ | Δ | X | X | ○ |

Referring to Table 1, it is determined that the polypropylene-based multilayer film, in which a skin layer, a core layer, and a seal layer are included in the specific composition range according to the present invention, the thickness ratio of the seal layer in the entire film is within a certain range, and the seal layer thickness and the rubber domain size of the propylene-based binary copolymer or propylene-based tertiary copolymer are within a certain ratio, provides excellent adhesive performance and satisfies formability in post-processing (see forming performance)together and also provides excellent mechanical properties, surface properties, and transparency, when used as a sealant layer of a cell pouch (see heat bonding strength and peel seal).

In this context, it is seen that, in terms of thermal bonding strength, when the thickness ratio of the seal layer to the entire film is less than 10% (Comparative Example 1), the amount of heat absorbed by the core layer increases relatively, causing interlayer peeling, low thermal bonding strength, and degraded forming performance, and when the ratio is greater than 15% (Comparative Example 2), the thermal bonding strength is excellent, but during the thermal bonding strength test, peeling does not take place between the multilayer films (see FIG. 1(a)) and delamination takes place between the multilayer film and the aluminum foil (see FIG. 1(c)).

In addition, it is seen that when thermally bonding films, the rubber domain, which has a lower glass transition temperature (Tg) than matrix, melts and assists in thermal bonding, and when the rubber domain size is greater than 10% of the seal layer thickness (Comparative Example 3), a portion to be bonded when the films come into contact becomes greater to increase the thermal bonding strength but cause delamination, and when the domain size is less than 3% of the seal layer thickness (Comparative Example 4), the thermal bonding strength and forming performance are degraded.

Accordingly, it is determined that in a multilayer film used as a sealant layer of a cell pouch, the seal layer thickness that satisfies all excellent mechanical properties, surface properties, and transparency along with adhesive performance and formability in post-processing, and the rubber domain size of propylene-based binary or tertiary copolymers are related, and the polypropylene-based multilayer film including a skin layer, a core layer, and a seal layer according to the present invention is capable of sufficiently living up to the relationship.

The preferred embodiments of the present invention have been described in detail. The description of the present invention has been presented for purposes of illustration, and it will be understood by those skilled in the art that other specific modifications may be easily made without changing the technical idea or essential features thereof.

Therefore, the scope of the present invention is represented by the following claims rather than the above detailed description, and all changes and changed forms derived from the meaning, scope, and equivalent concepts of the claims should be construed as being included in the scope of the present invention.

## Claims

1. A polypropylene-based multilayer film comprising (a) a propylene-based binary copolymer or a propylene-based tertiary copolymer, (b) an amorphous propylene rubber, (c) an amide-based slip agent, (d) an anti-blocking agent, and (e) a modified polyolefin, the propylene-based multilayer film comprising a skin layer, a core layer, and a seal layer,
wherein the seal layer has a thickness in the range of 10 to 15% of a thickness of the multilayer film, and (a) the propylene-based binary copolymer or the propylene-based tertiary copolymer has a rubber domain having a size of 3 to 10% of a thickness of the seal layer formed therein.

2. The polypropylene-based multilayer film of claim 1, wherein (a) the propylene-based binary copolymer or the propylene-based tertiary copolymer comprises ethylene in an amount of 2 wt% to 7 wt% or 1-butene in an amount of 0 wt% to 6 wt%,
(b) the amorphous propylene rubber comprises ethylene or 1-butene in an amount of 10 wt% to 60 wt%,
(c) the amide-based slip agent is a saturated amide-based organic compound or an unsaturated amide-based organic compound,
(d) the anti-blocking agent is a spherical silica having an average particle diameter of 1.5 to 3 µm, and
(e) the modified polyolefin is formed with dicarboxylic acid or acid anhydride thereof grafted in an amount of 1 to 10 wt%.

3. The polypropylene-based multilayer film of claim 2, wherein (a) the propylene-based binary copolymer or the propylene-based tertiary copolymer has a melting point (Tm) of 125 °C to 155 °C and a melt index MI (230 °C, a load of 2.16 kg) of 1 to 12 g/10 min,
(b) the amorphous propylene rubber has a melt index MI (230 °C, a load of 2.16 kg) of 1 to 5 g/10 min,
(c) the amide-based slip agent is a mixture of two or more of amide-based slip agents having 14 to 22 carbon atoms, and
(d) the anti-blocking agent is particles having a moisture content of less than 0.5 wt% when dried at 105 °C for 60 min, the particles having a bulk density of 0.8 g/cm³ to 1.0 g/cm'.

4. The polypropylene-based multilayer film of claim 1, wherein the skin layer comprises (a) the propylene-based binary copolymer or the propylene-based tertiary copolymer in an amount of 70 parts by weight to 99 parts by weight, (e) the modified polyolefin in an amount of 1 part by weight to 30 parts by weight, and (d) the anti-blocking agent in an amount of 0.1 parts by weight to 2 parts by weight,
the core layer comprises (a) the propylene-based binary copolymer or the propylene-based tertiary copolymer in an amount of 50 parts by weight to 90 parts by weight and (b) the amorphous propylene rubber in an amount of 10 parts by weight to 50 parts by weight,
the seal layer comprises (a) the propylene-based binary copolymer or the propylene-based tertiary copolymer in an amount of 60 parts by weight to 140 parts by weight, (c) the amide-based slip agent in an amount of 0.1 parts by weight to 2 parts by weight, and (d) the anti-blocking agent in an amount of 0.1 parts by weight to 2 parts by weight, and
with respect to the total film composition, (a) the propylene-based binary copolymer or the propylene-based tertiary copolymer is contained in an amount of 80 parts by weight to 90 parts by weight, (b) the amorphous propylene rubber is contained in an amount of 10 parts by weight to 20 parts by weight, (c) the amide-based slip agent is contained in an amount of 0.1 parts by weight to 0.3 parts by weight, d) the anti-blocking agent is contained in an amount of 0.05 parts by weight to 0.1 parts by weight, and (e) the modified polyolefin is contained in an amount of 0.4 part by weight to 0.8 parts by weight.

5. The polypropylene-based multilayer film of claim 1, wherein the multilayer film has a thermal bonding strength of 60 N/15 mm or greater as measured according to a method below, and a peel strength that remains 80% or greater after immersion in an electrolyte solution,
[Method of measuring thermal bonding strength]
the multilayer film (40 um thick), an aluminum foil (50 um thick, stacked on the skin layer of the multilayer film), and nylon (15 um thick, stacked on the aluminum foil) are sequentially stacked, combined at 130 °C, and cured at 50 °C for 14 days, and the cured combined film is brought into contact with the multilayer film, heat-sealed at 200 °C with 2 kgf for 1 s, and cut to a width of 15 mm to measure peel strength at a peel angle of 180° at a peel rate of 100 mm/min at 23 °C, and
[Method of measuring electrolyte resistance properties]
the test piece used for measuring the thermal bonding strength is immersed in an electrolyte solution at 85 °C for 75 hours, and then the peel strength thereof is measured in the same manner as in the method for measuring the thermal bonding strength.

6. The polypropylene-based multilayer film of claim 1, wherein the multilayer film has no burst in a forming test according to a method below, and peeling takes place only between the multilayer films upon testing of thermal bonding strength,
[Method of measuring forming performance]
the combined film is placed on a frame-type metal mold (10 cm X 10 cm) with the nylon surface touching an edge of the mold, and the multilayer film surface is pressed with a square pendulum to perform drawing up to a depth of at least 6 mm 5 times to determine the number of bursts in a corner portion of the combined film, and
[Method of testing thermal bonding strength]
the multilayer film (40 um thick), an aluminum foil (50 um thick, stacked on the skin layer of the multilayer film), and nylon (15 um thick, stacked on the aluminum foil) are sequentially stacked, combined at 130 °C, and cured at 50 °C for 14 days, and the cured combined film is brought into contact with the multilayer film, heat-sealed at 200 °C with 2 kgf for 1 s, and cut to a width of 15 mm to perform peeling at a peel angle of 180° at a peel rate of 100 mm/min at 23 °C.

7. A material for a cell pouch comprising:
a sealant layer formed of the polypropylene-based multilayer film according to any one of claims 1 to 6;
a barrier layer formed on the sealant layer; and
an outer resin layer formed on the barrier layer.
